# EUROPÄISCHE PATENTSCHRIFT

(11) **EP 2 934 940 B1**
(45) Veröffentlichungstag und Bekanntmachung des Hinweises auf die Patenterteilung: **18.07.2018**
(21) Anmeldenummer: 13802656.2
(22) Anmeldetag: 11.12.2013
(51) Int. Cl.: B60K 37/06, G06K 13/08, H01R 13/447

(54) **ELEKTRONISCHES KRAFTFAHRZEUGGERÄT MIT EINER STECKERAUFNAHME MIT VERSCHLIESSENDER ABDECKUNG FÜR DIE STECKERAUFNAHME**
ELECTRONIC MOTOR VEHICLE DEVICE HAVING A CONNECTOR SOCKET WITH SHUTTER FOR THE CONNECTOR SOCKET
APPAREIL ÉLECTRONIQUE DE VÉHICULE AUTOMOBILE POURVU D'UN LOGEMENT DE FICHE PRÉSENTANT UN VOLET D'OBSTRUCTION DU LOGEMENT

(30) Priorität: 21.12.2012 DE 102012224281
(43) Veröffentlichungstag der Anmeldung: 28.10.2015
(73) Patentinhaber: Continental Automotive GmbH, 30165 Hannover (DE)
(72) Erfinder: WAHLER, Torsten, 78073 Bad Dürrheim (DE)
(86) Internationale Anmeldenummer: PCT/EP2013/076223
(87) Internationale Veröffentlichungsnummer: WO 2014/095518

(56) Entgegenhaltungen:
- DE-A1- 10 335 866
- DE-B3- 10 325 072
- US-A1- 2004 110 402
- US-A1- 2006 022 040
- US-A1- 2009 280 664

## Beschreibung

Die Erfindung bezieht sich auf ein elektronisches Kraftfahrzeuggerät, insbesondere Kraftfahrzeugdatengerät zum Anordnen in einem Kraftfahrzeug, mit einem eine Gerätefrontblende aufweisenden Gehäuse und mit einer von außerhalb des Gehäuses durch eine in der Gerätefrontblende angeordnete Gehäuseöffnung zugänglichen Steckeraufnahme, wobei das Gehäuse eine die Gehäuseöffnung verschließende Abdeckung aufweist.

Es ist ein als Tachograph ausgebildetes elektronisches Kraftfahrzeuggerät mit einem Gehäuse bekannt, welches Kraftfahrzeuggerät eine von außerhalb des Gehäuses durch eine in einer Gerätefrontblende angeordnete Gehäuseöffnung zugängliche Steckeraufnahme besitzt. Die Steckeraufnahme dieses Geräts ist im unbenutzten Zustand mittels einer drehbar gelagerten Verschlusskappe verschlossen, um sowohl die Steckeraufnahme als auch das Innere des Gehäuses vor Beschädigung und möglicher Verschmutzung zu schützen. Zum Öffnen der Verschlusskappe wird diese aus der Gehäuseöffnung herausgeschwenkt. Abhängig von einer Einbaulage des Kraftfahrzeuggeräts in einem Kraftfahrzeug und einer Geschicklichkeit eines Benutzers kann das Öffnen der Verschlusskappe gegebenenfalls einen gewissen Aufwand erfordern.

Ein elektronisches Kraftfahrzeuggerät mit den Merkmalen des Oberbegriffs des Anspruchs 1 ist aus der DE 103 25 072 B3 bekannt.

Aufgabe der Erfindung ist es, ein Kraftfahrzeuggerät der eingangs genannten Art zu schaffen, welches bei gutem Schutz der Steckeraufnahme und des Inneren des Gehäuses eine leichte Zugänglichkeit der Steckeraufnahme bietet.

Diese Aufgabe wird erfindungsgemäß dadurch gelöst, dass die Abdeckung von der Innenseite des Gehäuses her an dem Öffnungsrand der Gehäuseöffnung die Gehäuseöffnung verschließend anliegt, dass das Gehäuse eine erste Abdeckungsführung, entlang welcher ersten Abdeckungsführung die Abdeckung in das Gehäuse hinein bewegbar ist, wobei das Gehäuse eine sich unmittelbar an die erste Abdeckungsführung anschließende zweite Abdeckungsführung, wobei die erste Abdeckungsführung und die zweite Abdeckungsführung jeweils eine Linearführung ist, aufweist, entlang welcher zweiten Abdeckungsführung die Abdeckung die Steckeraufnahme freigebend in einer zu einer Gerätefrontblendenebene parallelen Ebene in dem Gehäuse verschiebbar ist, sodass die geöffnete Abdeckung nicht nach außen von dem Gehäuse vorsteht.

Damit verschließt die Abdeckung im geschlossenen Zustand die Gehäuseöffnung zuverlässig, so dass die Steckeraufnahme und das Innere des Gehäuses vor möglicher Verschmutzung und Beschädigung geschützt sind. Bei der Bewegung der Abdeckung in das Gehäuse hinein liegt die Abdeckung nicht mehr, zumindest aber nicht mehr vollständig, an dem Öffnungsrand der Gehäuseöffnung an. Für eine durchgängig gleichmäßige und damit besonders leichte Beweg- und Verschiebbarkeit der Abdeckung ist es besonders vorteilhaft, wenn die zweite Abdeckungsführung sich unmittelbar an die erste Abdeckungsführung anschließt.

Für einen dauerhaft guten Schutz des Inneren des Gehäuses bei gleichzeitig leichter Zugänglichkeit der Steckeraufnahme wird die Abdeckung zum Freigeben der Steckeraufnahme in das Gehäuse hinein verschoben. Für eine hohe Dichtigkeit des Gehäuses im geschlossenen Zustand der Abdeckung kann diese zum Beispiel an ihrem Außenrand konisch ausgebildet sein und mit ihrer konischen Außenrandfläche am Öffnungsrand der Gehäuseöffnung anliegen. Denkbar ist auch, dass die Abdeckung an ihrem Außenrand eine elastische Dichtung, beispielsweise eine Gummidichtung, aufweist. Auch kann der Öffnungsrand entsprechend konisch ausgebildet sein oder eine entsprechende elastische Dichtung aufweisen.

Von besonderem Vorteil ist bei der Erfindung auch, dass die geöffnete Abdeckung nicht nach außen von dem Gehäuse vorsteht, wie es bei der aus dem Stand der Technik bekannten, herausschwenkbaren Verschlusskappe der Fall ist. Außerdem ist die Abdeckung bei dem erfindungsgemäßen Kraftfahrzeuggerät vorteilhaft unverlierbar, das heißt sie kann nicht verlorengehen, da die Abdeckung auch im geöffneten Zustand am Gehäuse des Geräts verbleibt. Es gibt bei der Erfindung keine abstehenden oder losen Bauteile, welche beispielsweise abgerissen werden oder verloren gehen könnten. Von Vorteil ist zudem, dass sich die Abdeckungsführungen des erfindungsgemäßen Kraftfahrzeuggeräts sehr einfach herstellen lassen.

Vorzugsweise ist das erfindungsgemäße elektronische Kraftfahrzeuggerät ein Kraftfahrzeugdatengerät. Bevorzugte Beispiele für ein solches Kraftfahrzeugdatengerät sind ein Tachograph oder ein Mautgerät oder ein die Funktionen eines Tachographen und die Funktionen eines Mautgeräts umfassendes Kraftfahrzeugdatengerät (sogenannte Universal On-Board Unit (Universelle Bordeinheit)) . Bei diesen vorgenannten Geräten, die insbesondere auch unter rauhen Umweltbedingungen und unter beengten Platzverhältnissen, hauptsächlich in Fahrerkabinen von als Nutzfahrzeuge ausgebildeten Kraftfahrzeugen, sehr verlässlich betrieben werden können müssen, ist eine zuverlässige, einfache Bedienbarkeit und ein guter Schutz des Gerätes von besonders hoher Bedeutung. Die Steckeraufnahme des erfindungsgemäßen Kraftfahrzeuggeräts kann vorteilhaft eine Prüf- und Programmierschnittstelle für das Kraftfahrzeuggerät umfassen.

Zusätzliche vorteilhafte Weiterbildungen der Erfindung sind in den Unteransprüchen angegeben.

Eine besonders gute Abdichtung der Gehäuseöffnung in einem geschlossenen Zustand der Abdeckung kann bei gleichzeitig sehr kostengünstiger konstruktiver Gestaltung dadurch erreicht werden, dass gemäß einer vorteilhaften Weiterbildung der Erfindung die Abdeckung an ihrem Außenrand eine umlaufende ebene Dichtungsfläche aufweist und dass die Dichtungsfläche von der Innenseite des Gehäuses her an dem die Gehäuseöffnung begrenzenden umlaufenden Öffnungsrandbereich der Gerätefrontblende anliegt. Im geschlossenen Zustand der Abdeckung liegt die Dichtungsfläche der Abdeckung somit am Öffnungsrandbereich an. Vorzugsweise kann der Öffnungsrandbereich eine korrespondierende Dichtungsfläche aufweisen. Der Außenrand der Abdeckung kann vorzugsweise im Querschnitt einen Absatz die Dichtungsfläche bildend aufweisen.

Eine kostengünstige Gestaltung der Abdeckungsführungen und eine einfache Fertigung des Kraftfahrzeuggeräts sowie eine sehr leichte Bedienbarkeit wird erfindungsgemäß dadurch erreicht, dass die erste Abdeckungsführung und die zweite Abdeckungsführung jeweils eine Linearführung ist.

Wenn sich entsprechend einer anderen Weiterbildung der Erfindung die zweite Abdeckungsführung unter einem stumpfen Winkel, das heißt unter einem Winkel größer 90° und kleiner 180°, an die erste Abdeckungsführung anschließt, lässt sich die Abdeckung zum Öffnen der Gehäuseöffnung und Freigeben der Steckeraufnahme vorteilhaft besonders einfach und leicht verschieben.

Einer anderen vorteilhaften Weiterbildung der Erfindung entsprechend ist vorgesehen, dass die erste Abdeckungsführung eine zwei sich entsprechende, parallel angeordnete Führungen aufweisende erste Abdeckungsdoppelführung ist und dass die zweite Abdeckungsführung eine zwei sich entsprechende, parallel angeordnete Führungen aufweisende zweite Abdeckungsdoppelführung ist. Mit der Ausführung der Abdeckungsführungen als Abdeckungsdoppelführungen wird eine sehr zuverlässige, stabile Lagerung der Abdeckung und eine hohe Haltbarkeit erreicht.

Man könnte sich vorstellen, dass die Abdeckung beispielsweise mit oberen und/oder unteren Kantenflächen der Abdeckung entlang den Abdeckungsführungen bewegbar ist. Für eine besonders leichte Beweg- und Verschiebbarkeit der Abdeckung kann gemäß einer anderen Weiterbildung der Erfindung hingegen vorteilhaft vorgesehen sein, dass die Abdeckung Führungszapfen besitzt und dass die Abdeckungsführungen Gleitführungsbahnen aufweisen, wobei die Führungszapfen in den Gleitführungsbahnen angeordnet sind. Die Führungszapfen sind vorzugsweise in Eckbereichen der Abdeckung und möglichst weit voneinander entfernt angeordnet. Vorzugsweise weist die Abdeckung für eine stabile Führung vier Führungszapfen auf. Insbesondere können zwei Führungszapfen an einem oberen Rand der Abdeckung und zwei Führungszapfen an einem unteren, dem oberen Rand gegenüberliegenden Rand der Abdeckung angeordnet sein.

Gemäß einer anderen vorteilhaften Weiterbildung der Erfindung weisen die Abdeckungsführungen Führungsbahnen auf, und die Führungsbahnen weisen eine erste Bahnflanke und eine der ersten Bahnflanke gegenüberliegende zweite Bahnflanke auf, wobei die erste Bahnflanke jeweils an der Gerätefrontblende und die zweite Bahnflanke jeweils an einer Aufnahmeplatte des Gehäuses ausgebildet ist. Auf diese Weise kann die Fertigung des erfindungsgemäßen Kraftfahrzeuggeräts erheblich vereinfacht werden. Grundsätzlich könnte die Abdeckung beispielsweise mittels Rollen in den Führungsbahnen geführt sein; für einen besonders einfachen, kostengünstigen Aufbau sind die Führungsbahnen vorzugsweise jedoch Gleitführungsbahnen.

Die Abdichtung des Gehäuses kann vorteilhaft zusätzlich verbessert werden, wenn gemäß einer anderen Weiterbildung der Erfindung das Gehäuse eine auf die Abdeckung und in Richtung der Gerätefrontblende wirkende Federvorrichtung aufweist. Vorzugsweise ist die Federvorrichtung derart angeordnet, dass eine Federkraft der Federvorrichtung permanent auf die Abdeckung diese an die der Innenseite des Gehäuses zugewandte Rückseite der Gerätefrontblende drückend wirkt.

Grundsätzlich könnte die Federvorrichtung zum Beispiel ein als Druckfeder oder als Zugfeder oder als Schenkelfeder ausgebildetes Federelement aufweisen. Eine sehr kostengünstige und dauerhaltbare Gestaltung kann jedoch erreicht werden, wenn gemäß einer vorteilhaften Weiterbildung der Erfindung die Federvorrichtung eine gehäusefest angeordnete und an einer dem Inneren des Gehäuses zugewandten Rückseite der Abdeckung anliegende Blattfeder aufweist. Vorzugsweise kann die Blattfeder fest an der vorgenannten Auf nahmeplatte angeordnet sein. Bei sich bewegender Abdeckung, das heißt wenn die Abdeckung zum Freigeben der Steckeraufnahme verschoben wird, kann die Blattfeder, insbesondere zum Beispiel eine Blattfederlasche der Blattfeder, an der Abdeckung, insbesondere an einer der Innenseite des Gehäuses zugewandten Abdeckungsrückseite der Abdeckung, gleiten.

Ausführungsbeispiele der Erfindung sind in der schematisierten Zeichnung dargestellt und werden im Folgenden näher beschrieben. Es zeigen
- Figur 1: eine Druckerbaugruppe eines elektronischen Kraftfahrzeuggeräts mit einer Gehäuseöffnung und einer die Gehäuseöffnung verschließenden Abdeckung in perspektivischer Ansicht,
- Figur 2: die Druckerbaugruppe nach Figur 1 mit geöffneter Abdeckung,
- Figur 3a: die Abdeckung nach Figur 1 in einer Ansicht von vorne,
- Figur 3b: die Abdeckung nach Figur 3a in einer Draufsicht,
- Figur 3c: die Abdeckung nach Figur 3a in einer perspektivischen Ansicht von schräg unten,
- Figur 4: eine perspektivische Schnittansicht eines Ausschnitts der Druckerbaugruppe nach Figur 1 mit geschlossener Abdeckung,
- Figur 5a: eine Gerätfrontblende und eine Aufnahmeplatte der Anordnung nach Figur 4 in einer Vorderansicht,
- Figur 5b: eine Schnittansicht entlang Linie N - N in Figur 5a,
- Figur 5c: eine Schnittansicht entlang Linie M - M in Figur 5a,
- Figur 6: eine perspektivische Schnittansicht eines Ausschnitts der Druckerbaugruppe nach Figur 1 mit zum Öffnen gedrückter Abdeckung,
- Figur 7a: eine Gerätefrontblende und eine Aufnahmeplatte der Anordnung nach Figur 6 in einer Vorderansicht,
- Figur 7b: eine Schnittansicht entlang Linie N - N in Figur 7a,
- Figur 7c: eine Schnittansicht entlang Linie M - M in Figur 7a,
- Figur 8: eine perspektivische Schnittansicht eines Ausschnitts der Druckerbaugruppe nach Figur 1 mit geöffneter Abdeckung,
- Figur 9a: eine Gerätefrontblende und eine Aufnahmeplatte der Anordnung nach Figur 8 in einer Vorderansicht,
- Figur 9b: eine Schnittansicht entlang Linie N - N in Figur 9a und
- Figur 9c: eine Schnittansicht entlang Linie M - M in Figur 9a.

Sich jeweils entsprechende Elemente sind in allen Figuren mit gleichen Bezugszeichen versehen.

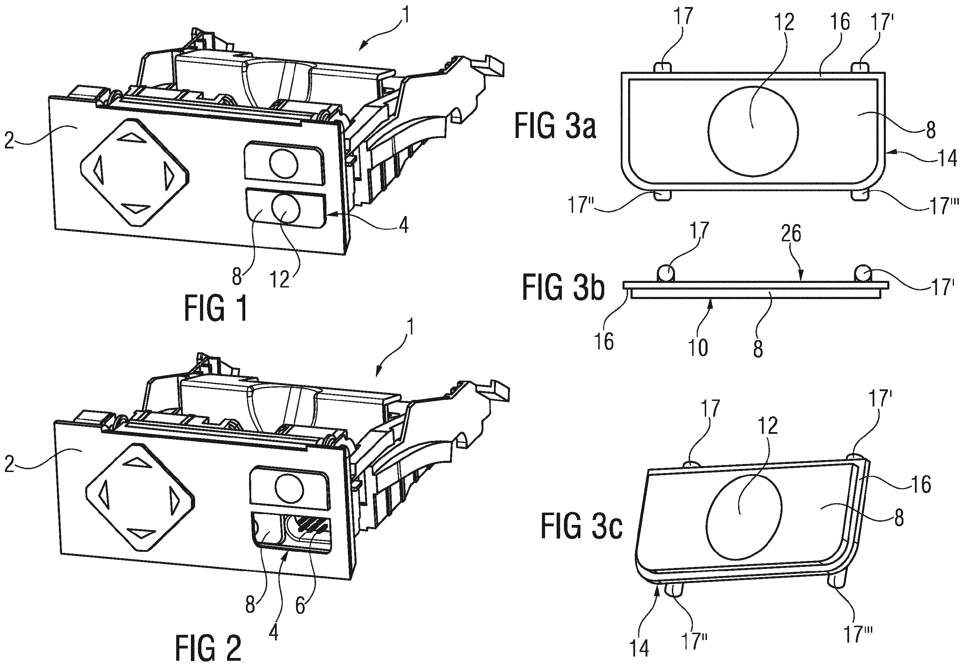

Figuren 1, 2 zeigen einen Teil eines als universelle Bordeinheit ausgebildeten elektronischen Kraftfahrzeuggeräts in einer perspektivischen Ansicht. Der hier gezeigte Teil des elektronischen Kraftfahrzeuggeräts umfasst eine Druckerbaugruppe 1 des Kraftfahrzeuggeräts mit einer Gerätefrontblende 2, welche Gerätefrontblende 2 beweglicher Bestandteil einer hier nicht weiter gezeigten Gerätefront eines Gehäuses des Kraftfahrzeuggeräts ist. In der Gerätefrontblende 2 ist eine Gehäuseöffnung 4 angeordnet, durch welche Gehäuseöffnung 4 eine Steckeraufnahme 6 des Kraftfahrzeuggeräts von außerhalb des Gehäuses her zugänglich ist. Das Gehäuse weist eine die Gehäuseöffnung verschließende Abdeckung 8 auf. In Figur 1 ist die Abdeckung 8 in einem geschlossenen Zustand, in Figur 2 in einem geöffneten Zustand dargestellt.

In Figuren 3a, 3b, 3c ist die Abdeckung 8 als Einzelteil in verschiedenen Ansichten gezeigt. Es ist zu erkennen, dass die Abdeckung 8 als ebenes Bauteil ausgebildet ist und eine im Wesentlichen, nämlich bis auf zwei abgerundete Ecken, rechteckige Form besitzt. In ihrem mittigen Bereich ist die Abdeckung 8 an ihrer einem Benutzer zugewandten Abdeckungsfrontseite 10 mit einer Bedienmulde 12 versehen. An ihrem Außenrand 14 weist die Abdeckung 8 eine umlaufende ebene Dichtungsfläche 16 auf. Außerdem besitzt die Abdeckung 8 vier Führungszapfen 17, 17', 17", 17''', von welchen zwei Führungszapfen 17, 17' oben an der Abdeckung 8 und zwei Führungszapfen 17", 17''' unten an der Abdeckung 8 angeordnet sind.

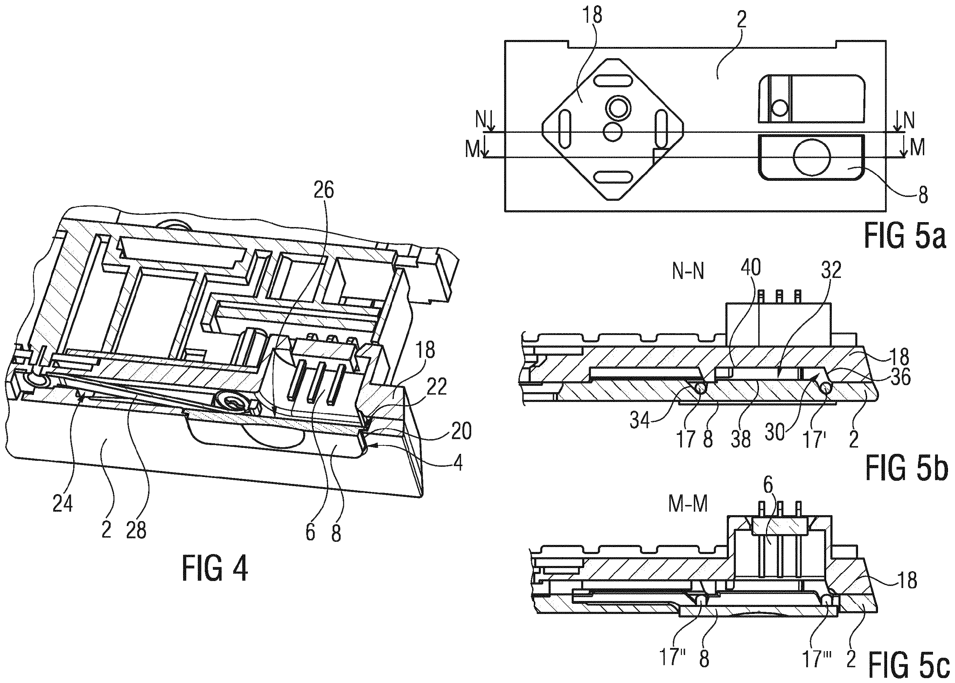

Figur 4 zeigt eine perspektivische Schnittansicht eines Ausschnitts der Druckerbaugruppe 1. Hier ist zu erkennen, dass die Gerätefrontblende 2 auf einer Aufnahmeplatte 18 des Gehäuses angeordnet ist. Die Abdeckung 8 verschließt die Gehäuseöffnung 4 und liegt dabei von der Innenseite des Gehäuses her an dem Öffnungsrand 20 der Gehäuseöffnung 4 an. Eine besonders hohe Dichtigkeit erreichend liegt die an dem Außenrand 14 der Abdeckung 8 umlaufende Dichtungsfläche 16 (siehe Figur 3c) von der Innenseite des Gehäuses her an dem die Gehäuseöffnung 4 begrenzenden umlaufenden Öffnungsrandbereich 22 der Gerätefrontblende 2 an.

Außerdem weist das Gehäuse eine auf die Abdeckung 8 und in Richtung der Gerätefrontblende 2 wirkende Federvorrichtung 24 auf. Die Federvorrichtung 24 weist eine an einer dem Inneren des Gehäuses zugewandten Rückseite 26 der Abdeckung 8 anliegende, gegen die an der Gerätefrontblende 2 anliegende Abdeckung 8 vorgespannte Blattfeder 28 auf. Durch eine starre Anbringung der Blattfeder 28 an der Aufnahmeplatte 18 ist die Federvorrichtung 24 gehäusefest angeordnet. Mit Hilfe der Federvorrichtung 24 wird die Abdeckung 8 beim Verschließen der Gehäuseöffnung 4, das heißt nachdem die Abdeckung 8 geöffnet und die Steckeraufnahme freigegeben worden war, selbsttätig in ihre geschlossene Position zurückgedrückt.

Die Gerätefrontblende 2 und die Aufnahmeplatte 18 nach Figur 4 sind zusammen mit der Abdeckung 8 in Figuren 5a, 5b, 5c in verschiedenen weiteren Ansichten dargestellt.

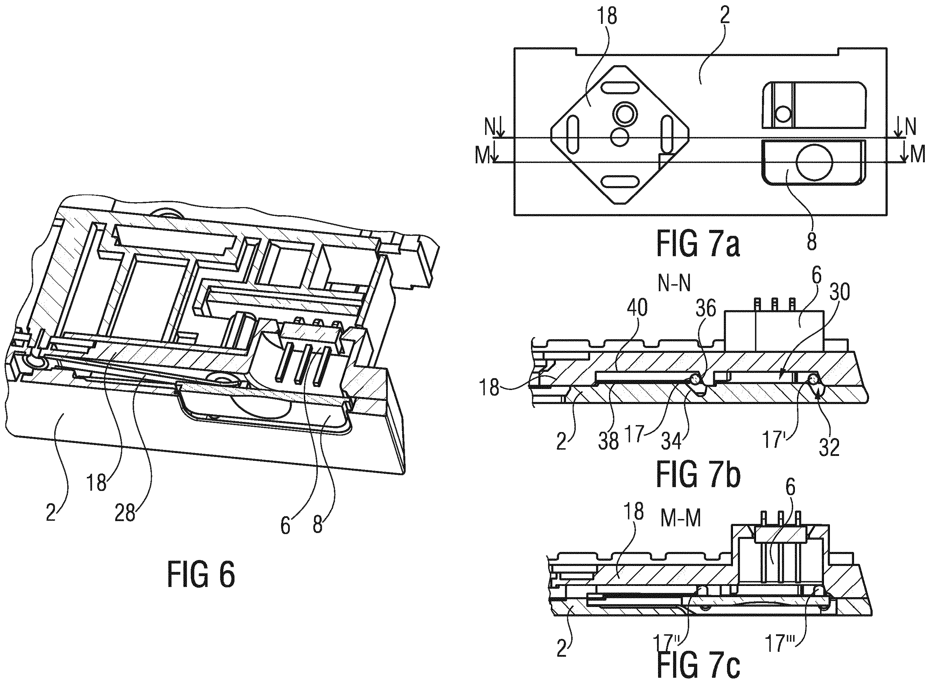

Eine mit Figur 4 korrespondierende Darstellung zeigt Figur 6, wobei hier im Unterschied zu Figur 4, in welcher sich die Abdeckung 8 in geschlossenem Zustand befindet, die Abdeckung 8 sich in zum Öffnen, das heißt zum Freigeben der Steckeraufnahme 6, gedrücktem Zustand befindet. Beim Drücken der Abdeckung 8 wird die Blattfeder 28 weiter gespannt. Die Gerätefrontblende 2 und die Aufnahmeplatte 18 nach Figur 6 sind zusammen mit der Abdeckung 8 in Figuren 7a, 7b, 7c in verschiedenen weiteren Ansichten dargestellt.

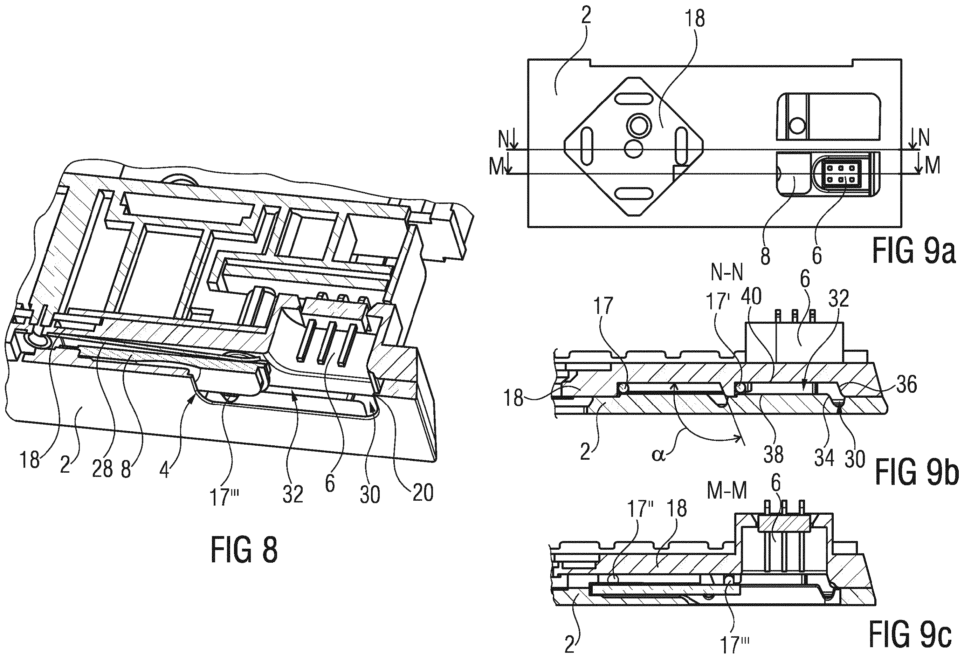

Eine weitere, mit Figuren 4, 6 korrespondierende Darstellung zeigt Figur 8, wobei hier im Unterschied zu Figur 6 die Abdeckung 8 nicht nur in das Gehäuse hinein bewegt, nämlich gegen die Federkraft der Blattfeder 28 hinein gedrückt, ist, sondern auch in einer zu einer Gerätfrontblendenebene der Gerätefrontblende 2 parallelen Ebene seitlich, und zwar in der gewählten Darstellung nach links, in dem Gehäuse verschoben ist. Durch das seitliche Verschieben der Abdeckung 8 wird die Steckeraufnahme 6 freigegeben und ist somit zugänglich. Die Gerätfrontblende 2 und die Aufnahmeplatte 18 nach Figur 8 sind zusammen mit der Abdeckung 8 in Figuren 9a, 9b, 9c in verschiedenen weiteren Ansichten dargestellt.

Insbesondere in Figuren 5b, 7b, 9b ist zu erkennen, dass das Gehäuse eine erste Abdeckungsführung 30 aufweist, entlang welcher ersten Abdeckungsführung 30 die Abdeckung 8 in das Gehäuse hinein bewegbar ist. Außerdem weist das Gehäuse eine sich an die erste Abdeckungsführung 30 unmittelbar anschließende zweite Abdeckungsführung 32 auf, entlang welcher zweiten Abdeckungsführung 32 die Abdeckung 8 die Steckeraufnahme 6 freigebend in einer zu der Gerätefrontblendenebene, das heißt zu der Ebene, in welcher die Gerätefrontblende 2 angeordnet ist, parallelen Ebene verschiebbar ist.

Die erste Abdeckungsführung 30 ist eine zwei sich entsprechende, parallel angeordnete Führungen aufweisende erste Abdeckungsdoppelführung, wobei eine erste der beiden genannten Führungen eine obere Führung ist, in welcher die beiden oberen Führungszapfen 17, 17' der Abdeckung 8 geführt werden, und die zweite der beiden genannten Führungen eine untere Führung ist, in welcher die beiden unteren Führungszapfen 17", 17''' der Abdeckung 8 geführt werden. Entsprechend ist auch die zweite Abdeckungsführung 32 eine zwei sich entsprechende, parallel angeordnete Führungen aufweisende zweite Abdeckungsdoppelführung.

Die erste Abdeckungsführung 30 und die zweite Abdeckungsführung 32 sind zudem doppelt vorhanden, das heißt in diesem Ausführungsbeispiel gibt es eine doppelte vorgenannte obere Führung (jeweils eine für einen der beiden oberen Führungszapfen 17, 17' der Abdeckung 8) und eine doppelte vorgenannte untere Führung (jeweils eine für einen der beiden unteren Führungszapfen 17", 17''' der Abdeckung 8).

Sowohl die erste Abdeckungsführung 30 als auch die zweite Abdeckungsführung 32 ist jeweils eine Linearführung, und die zweite Abdeckungsführung 32 schließt sich unter einem stumpfen Winkel α an die erste Abdeckungsführung 30 an. Die Abdeckungsführungen 30, 32 weisen Gleitführungsbahnen auf, in welchen die Führungszapfen 17, 17', 17", 17''' der Abdeckung 8 angeordnet sind und bei einer Bewegung der Abdeckung 8 geführt werden.

Die Gleitführungsbahnen der Abdeckungsführungen 30, 32 sind Führungsbahnen, die jeweils eine erste Bahnflanke 34, 38 und eine der ersten Bahnflanke gegenüberliegende zweite Bahnflanke 36, 40 aufweisen, wobei die erste Bahnflanke 34, 38 jeweils an der Gerätefrontblende 2 und die zweite Bahnflanke 36, 40 jeweils an der Aufnahmeplatte 18 des Gehäuses ausgebildet ist.

## Patentansprüche

1. Elektronisches Kraftfahrzeuggerät, insbesondere Kraftfahrzeugdatengerät zum Anordnen in einem Kraftfahrzeug, mit einem eine Gerätefrontblende (2) aufweisenden Gehäuse und mit einer von außerhalb des Gehäuses durch eine in der Gerätefrontblende (2) angeordnete Gehäuseöffnung (4) zugänglichen Steckeraufnahme (6), wobei das Gehäuse eine die Gehäuseöffnung (4) verschließende Abdeckung (8) aufweist, wobei die Abdeckung (8) von der Innenseite des Gehäuses her an dem Öffnungsrand (20) der Gehäuseöffnung (4) die Gehäuseöffnung (4) verschließend anliegt,
wobei das Gehäuse eine erste Abdeckungsführung (30) aufweist, entlang welcher ersten Abdeckungsführung (30) die Abdeckung (8) in das Gehäuse hinein bewegbar ist, **dadurch gekennzeichnet,**
**dass** das Gehäuse eine sich unmittelbar an die erste Abdeckungsführung (30) anschließende zweite Abdeckungsführung (32), wobei die erste Abdeckungsführung (30) und die zweite Abdeckungsführung (32) jeweils eine Linearführung ist, aufweist, entlang welcher zweiten Abdeckungsführung (32) die Abdeckung (8) die Steckeraufnahme (6) freigebend in einer zu einer Gerätefrontblendenebene parallelen Ebene in dem Gehäuse verschiebbar ist, sodass die geöffnete Abdeckung (8) nicht nach außen von dem Gehäuse vorsteht.

2. Kraftfahrzeuggerät nach Anspruch 1, **dadurch gekennzeichnet, dass** die Abdeckung (8) an ihrem Außenrand (14) eine umlaufende ebene Dichtungsfläche (16) aufweist und dass die Dichtungsfläche (16) von der Innenseite des Gehäuses her an dem die Gehäuseöffnung (4) begrenzenden umlaufenden Öffnungsrandbereich (22) der Gerätefrontblende (2) anliegt.

3. Kraftfahrzeuggerät nach einem der vorhergehenden Ansprüche, **dadurch gekennzeichnet, dass** sich die zweite Abdeckungsführung (32) unter einem stumpfen Winkel (a) an die erste Abdeckungsführung (30) anschließt.

4. Kraftfahrzeuggerät nach einem der vorhergehenden Ansprüche, **dadurch gekennzeichnet, dass** die erste Abdeckungsführung (30) eine zwei sich entsprechende, parallel angeordnete Führungen aufweisende erste Abdeckungsdoppelführung ist und dass die zweite Abdeckungsführung (32) eine zwei sich entsprechende, parallel angeordnete Führungen aufweisende zweite Abdeckungsdoppelführung ist.

5. Kraftfahrzeuggerät nach einem der vorhergehenden Ansprüche, **dadurch gekennzeichnet, dass** die Abdeckung (8) Führungszapfen (17, 17', 17", 17''') besitzt und dass die Abdeckungsführungen (30, 32) Gleitführungsbahnen aufweisen, wobei die Führungszapfen (17, 17', 17", 17''') in den Gleitführungsbahnen angeordnet sind.

6. Kraftfahrzeuggerät nach einem der vorhergehenden Ansprüche, **dadurch gekennzeichnet, dass** die Abdeckungsführungen (30, 32) Führungsbahnen aufweisen und dass die Führungsbahnen eine erste Bahnflanke (34, 38) und eine der ersten Bahnflanke (34, 38) gegenüberliegende zweite Bahnflanke (36, 40) aufweisen, wobei die erste Bahnflanke (34, 38) jeweils an der Gerätefrontblende (2) und die zweite Bahnflanke (36, 40) jeweils an einer Aufnahmeplatte (18) des Gehäuses ausgebildet ist.

7. Kraftfahrzeuggerät nach einem der vorhergehenden Ansprüche, **dadurch gekennzeichnet, dass** das Gehäuse eine auf die Abdeckung (8) und in Richtung der Gerätefrontblende (2) wirkende Federvorrichtung (24) aufweist.

8. Kraftfahrzeuggerät nach Anspruch 7, **dadurch gekennzeichnet, dass** die Federvorrichtung (24) eine gehäusefest angeordnete und an einer dem Inneren des Gehäuses zugewandten Rückseite (26) der Abdeckung anliegende Blattfeder (28) aufweist.

## Claims

1. Electronic motor vehicle device, in particular motor vehicle data device to be arranged in a motor vehicle, comprising a housing having a device front panel (2) and comprising a plug receptacle (6) which is accessible from outside the housing through a housing opening (4) which is arranged in the device front panel (2), wherein the housing has a cover (8) which closes the housing opening (4), wherein the cover (8) bears against the opening edge (20) of the housing opening (4), so as to close the housing opening (4), from the inside of the housing,
wherein the housing has a first cover guide (30) along which first cover guide (30) the cover (8) can be moved into the housing,
**characterized**
**in that** the housing has a second cover guide (32) which directly adjoins the first cover guide (30), wherein the first cover guide (30) and the second cover guide (32) are each a linear guide, along which second cover guide (32) the cover (8) can be displaced in a plane which is parallel to a device front panel plane in the housing so as to clear the plug receptacle (6), so that the open cover (8) does not project from the housing to the outside.

2. Motor vehicle device according to Claim 1, **characterized in that** the cover (8) has, at its outer edge (14), a circumferential planar sealing face (16), and **in that** the sealing face (16) bears against the circumferential opening edge region (22) of the device front panel (2), which opening edge region delimits the housing opening (4), from the inside of the housing.

3. Motor vehicle device according to either of the preceding claims, **characterized in that** the second cover guide (32) adjoins the first cover guide (30) at an obtuse angle (α).

4. Motor vehicle device according to one of the preceding claims, **characterized in that** the first cover guide (30) is a first cover double guide which has two corresponding guides which are arranged in parallel, and **in that** the second cover guide (32) is a second cover double guide which has two corresponding guides which are arranged in parallel.

5. Motor vehicle device according to one of the preceding claims, **characterized in that** the cover (8) has guide pins (17, 17', 17", 17'''), and **in that** the cover guides (30, 32) have sliding guide tracks, wherein the guide pins (17, 17', 17", 17''') are arranged in the sliding guide tracks.

6. Motor vehicle device according to one of the preceding claims, **characterized in that** the cover guides (30, 32) have guide tracks, and **in that** the guide tracks have a first track flank (34, 38) and a second track flank (36, 40) which is situated opposite the first track flank (34, 38), wherein the first track flank (34, 38) is respectively formed on the device front panel (2), and the second track flank (36, 40) is respectively formed on a receiving plate (18) of the housing.

7. Motor vehicle device according to one of the preceding claims, **characterized in that** the housing has a spring apparatus (24) which acts on the cover (8) and in the direction of the device front panel (2).

8. Motor vehicle device according to Claim 7, **characterized in that** the spring apparatus (24) has a leaf spring (28) which is arranged in a manner fixed to the housing and bears against a rear side (26) of the cover, which rear side faces the interior of the housing.

## Revendications

1. Appareil électronique de véhicule automobile, notamment appareil de données de véhicule automobile, destiné à être disposé dans un véhicule automobile, comprenant un boîtier qui possède un panneau avant d'appareil (2) et comprenant un logement de fiche (6) accessible depuis l'extérieur du boîtier au travers d'une ouverture de boîtier (4) disposée dans le panneau avant d'appareil (2), le boîtier possédant un cache (8) qui ferme l'ouverture de boîtier (4), le cache (8) reposant au niveau du bord d'ouverture (20) de l'ouverture de boîtier (4) par le côté intérieur du boîtier en fermant l'ouverture de boîtier (4),
le boîtier possédant un premier guide de cache (30), premier guide de cache (30) le long duquel le cache (8) peut être déplacé à l'intérieur du boîtier,
**caractérisé en ce**
**que** le boîtier possède un deuxième guide de cache (32) qui est directement rattaché au premier guide de cache (30), le premier guide de cache (30) et le deuxième guide de cache (32) étant respectivement un guide linéaire, deuxième guide de cache (32) le long duquel le cache (8) peut coulisser dans le boîtier en libérant le logement de fiche (6) dans un plan parallèle à un plan de panneau avant de boîtier, de sorte que le cache (8) ouvert ne fasse pas saillie à l'extérieur depuis le boîtier.

2. Appareil de véhicule automobile selon la revendication 1, **caractérisé en ce que** le cache (8) possède au niveau de son bord extérieur (14) une surface d'étanchéité (16) plane circonférentielle et **en ce que** la surface d'étanchéité (16) repose depuis le côté intérieur du boîtier contre la zone de bord d'ouverture circonférentielle du panneau avant d'appareil (2) qui délimite l'ouverture de boîtier (4).

3. Appareil de véhicule automobile selon l'une des revendications précédentes, **caractérisé en ce que** le deuxième guide de cache (32) se rattache au premier guide de cache (30) sous un angle obtus (α).

4. Appareil de véhicule automobile selon l'une des revendications précédentes, **caractérisé en ce que** le premier guide de cache (30) est un premier double guide de cache qui possède deux guides correspondants disposés en parallèle et **en ce que** le deuxième guide de cache (32) est un deuxième double guide de cache qui possède deux guides correspondants disposés en parallèle.

5. Appareil de véhicule automobile selon l'une des revendications précédentes, **caractérisé en ce que** le cache (8) possède des tenons de guidage (17, 17', 17", 17''') et **en ce que** les guides de cache (30, 32) possèdent des postes de guidage lisses, les tenons de guidage (17, 17', 17", 17''') étant disposés dans les pistes de guidage lisses.

6. Appareil de véhicule automobile selon l'une des revendications précédentes, **caractérisé en ce que** les guides de cache (30, 32) possèdent des pistes de guidage et que les pistes de guidage possèdent un premier flan de piste (34, 38) et un deuxième flanc de piste (36, 40) à l'opposé du premier flan de piste (34, 38), le premier flan de piste (34, 38) étant respectivement formé sur le panneau avant d'appareil (2) et le deuxième flanc de piste (36, 40) respectivement sur une plaque d'accueil (18) du boîtier.

7. Appareil de véhicule automobile selon l'une des revendications précédentes, **caractérisé en ce que** le boîtier possède un dispositif à ressort (24) qui agit sur le cache (8) et en direction du panneau avant d'appareil (2).

8. Appareil de véhicule automobile selon la revendication 7, **caractérisé en ce que** le dispositif à ressort (24) possède un ressort à lame (28) monté à demeure sur le boîtier et reposant contre un côté arrière (26) du cache faisant face à l'intérieur du boîtier.
